# EUROPEAN PATENT APPLICATION

(11) **EP 2 863 329 A1**
(43) Date of publication of application: **22.04.2015**
(21) Application number: 14186453.8
(22) Date of filing: 25.09.2014
(51) Int. Cl.: G06F 21/44, G06F 21/57

(54) **Establishing physical locality between secure execution environments**

(30) Priority: 21.10.2013 US 201314059442
(71) Applicant: Intel IP Corporation, Santa Clara, CA 95054 (US)
(72) Inventor: Martin, Jason, Beaverton, OR 97007 (US); Lal, Reshma, Hillsboro, OR 97124 (US); Nemiroff, Daniel, Folsom, CA 95630 (US)
(74) Representative: Hufton, David Alan

(57) **Abstract**

Embodiments of an invention for establishing physical locality between secure execution environments are disclosed. In one embodiment, a processor includes a storage location and an execution core. The storage location is to store a locality nonce. The execution core is to execute a first instruction to create a secure execution environment. The execution core is also to execute, from within the secure execution environment, a second instruction to read the locality nonce from the storage location.

## Description

### BACKGROUND

### 1. Field

The present disclosure pertains to the field of information processing, and more particularly, to the field of security in information processing systems.

### 2. Description of Related Art

Confidential information is stored, transmitted, and used by many information processing systems. Therefore, techniques have been developed to provide for the secure handling, transfer, and storing of confidential information. These techniques include various approaches to creating and maintaining a secured, protected, or isolated container, partition, or environment within an information processing system, and various approaches to transferring information between applications or agents operating within such containers, partitions, or environments.

For example, if a first agent desires a service from a second agent, the second agent may require proof of the authority and authenticity of the first agent before providing the service. The second agent requires assurance that the first agent will not misappropriate information, attack the system, or otherwise cause damage. When such assurance is obtained, a session key may be issued, the session key providing confidentiality, integrity, or both to the services requested and rendered.

### Brief Description of the Figures

The present invention is illustrated by way of example and not limitation in the accompanying figures.
Figure 1 illustrates a system providing for establishing physical locality between secure execution environments according to an embodiment of the present invention.
Figure 2 illustrates a method for establishing physical locality between secure execution environments according to an embodiment of the present invention.

### Detailed Description

Embodiments of an invention for establishing physical locality between secure execution environments are described. In this description, numerous specific details, such as component and system configurations, may be set forth in order to provide a more thorough understanding of the present invention. It will be appreciated, however, by one skilled in the art, that the invention may be practiced without such specific details. Additionally, some well-known structures, circuits, and other features have not been shown in detail, to avoid unnecessarily obscuring the present invention.

In the following description, references to "one embodiment," "an embodiment," "example embodiment," "various embodiments," etc., indicate that the embodiment(s) of the invention so described may include particular features, structures, or characteristics, but more than one embodiment may and not every embodiment necessarily does include the particular features, structures, or characteristics. Further, some embodiments may have some, all, or none of the features described for other embodiments.

As used in the claims, unless otherwise specified the use of the ordinal adjectives "first," "second," "third," etc. to describe an element merely indicate that a particular instance of an element or different instances of like elements are being referred to, and is not intended to imply that the elements so described must be in a particular sequence, either temporally, spatially, in ranking, or in any other manner.

Various approaches to creating and maintaining a trusted, secured, protected, or isolated container, partition, or execution environment within an information processing system have been developed. One such approach involves secure enclaves as described in the co-pending U.S. Patent Applications entitled "Method and Apparatus to Provide Secure Application Execution," filed June 19, 2012, Serial No. 13/527,547, which provides information regarding at least one embodiment of a trusted, secured, protected, or isolated container, partition, or execution environment. However, these references are not intended to limit the scope of embodiments of the present invention in any way and other embodiments may be used while remaining within the spirit and scope of the present invention.

Furthermore, various approaches may be used together. For example, the operation or execution of a management engine, manageability engine, converged security engine, or other such chipset, system, or platform logic may be considered a trusted or secure execution environment that may communicate with a different form of a trusted or secure execution environment, such as a secure enclave. Therefore, any instance of any trusted, secured, protected, or isolated container, partition, or execution environment used in any embodiment of the present invention may be referred to herein as a secure execution environment.

Embodiments of the present invention may be used to establish physical locality between secure execution environments, which may be desired to mitigate attacks on communications between secure execution environments. For example, a secure communication channel between a first and a second endpoint may be established using cryptographic protocols such as a sigma protocol, in which an authenticated key exchange allows both endpoints to know the identity of the other endpoint. Embodiments of the present invention may provide for both endpoints to also verify that they are on the same hardware platform. Therefore, embodiments of the present invention may be used to prevent malware, which has infected the second endpoint (for example, a hardware input/output (I/O) or other peripheral device), from redirecting the channel to a third endpoint that does not share physical locality with the first endpoint (for example, the third endpoint may be in a remote computer system or platform).

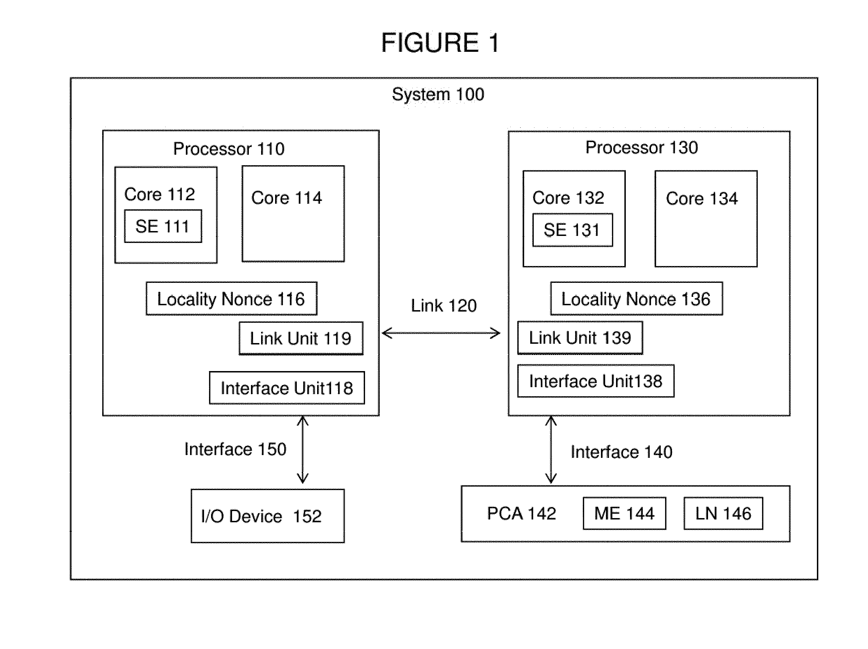

Figure 1 illustrates system 100, an information processing system providing for establishing physical locality between secure execution environments according to an embodiment of the present invention. System 100 may represent any type of information processing system, such as a server, a desktop computer, a portable computer, a set-top box, a hand-held device such as a tablet or a smart phone, or an embedded control system. System 100 includes processors 110 and 130, peripheral control agent (PCA) 142, and I/O device 152.

Systems embodying the present invention may include any number of each of these components and any other components or other elements, such as system memory, chipset components, other peripherals, etc. Any or all of the other components or other elements in any system embodiment may be connected, coupled, or otherwise in communication with each other through any number of buses, point-to-point, or other wired or wireless interfaces or connections. Any components or other portions of system 100, whether shown in Figure 1 or not shown in Figure 1, may be integrated or otherwise included on or in a single chip (a system-on-a-chip or SOC), die, substrate, or package.

Each of processors 110 and 130 may represent one or more processors integrated on a single substrate or packaged within a single package, each of which may include multiple threads and/or multiple execution cores, in any combination. Each processor represented as or in processor 110 or processor 130 may be any type of processor, including a general purpose microprocessor, such as a processor in the Intel® Core® Processor Family, Intel® Atom® Processor Family, or other processor family from Intel® Corporation, or another processor from another company, or a special purpose processor or microcontroller, and need not be from the same processor family.

Each of processors 110 and 130 may operate according to an instruction set architecture that includes a first instruction to create a secure execution environment, a second instruction to add content to a secure execution environment, a third instruction to measure content of a secure execution environment, a fourth instruction to initialize a secure execution environment, a fifth instruction to generate a report of a secure execution environment's content and/or identity, and a sixth instruction to get a key for use by a secure execution environment. Although embodiments of the present invention may be practiced with a processor having any instruction set architecture and are not limited to the architecture of a processor family from Intel® Corporation, the instructions may be part of a set of software protection extensions to an existing architecture, and may be referred to herein as an ECREATE instruction, an EADD instruction, an EEXTEND instruction, an EINIT instruction, an EREPORT instruction, and an EGETKEY instruction respectively. Support for these instructions may be implemented in a processor using any combination of circuitry and/or logic embedded in hardware, microcode, firmware, and/or other structures.

Processors 110 and 130 may be connected or coupled to each other by inter-processor link 120, which may represent any type of bus, point-to-point, or other wired or wireless interface or connection, including a link in an interconnect fabric such as an Intel® Quick Path Interconnect or an embodiment of a High Performance Interconnect described in the co-pending U.S. Patent application entitled Method, Apparatus, System for a High Performance Interconnect architecture, filed October 22, 2012, Serial No. 61/717,091, or any other type of connection according to any other communication architecture.

PCA 142 may represent any component including logic, circuitry, or other hardware to manage system logic, peripherals, and I/O adapters and devices in information processing system 100, any of which may be integrated into PCA 142 and/or may communicate with PCA 142, and to control/and or translate the transfer of information between these devices and any other component in information processing system 100, such as processors 110 and 130, system memory, and or a system memory controller (which may be integrated into processor 110 and or 130). PCA 142 may be connected or coupled to processor 130 by interface 140, which may represent any type of bus, point-to-point, or other wired or wireless interface or connection, including a Peripheral Component Interconnect Express (PCIe) bus or a Direct Media Interface (DMI) bus.

In this embodiment, PCA 142 includes management engine 144, which may include any hardware or firmware to provide and/or support functionality to monitor, maintain, update, upgrade, and/or repair system 100, which may include key provisioning and establishing a secure communication channel to a remote platform, or may represent any other manageability engine, converged security engine, or other chipset, system, or platform logic the operation or execution of which may be considered to be a trusted or secure execution environment.

PCA 142 also includes locality nonce storage location 146, which may represent a register or any other type of storage of any size in which to store a nonce. A locality nonce may be stored in locality nonce storage location 146 by a processor initiating or launching a trusted or secure execution environment or operating within a trusted execution environment or secure execution environment, through a special bus message or other protocol, or otherwise, as may be further described below.

I/O device 152 may represent any I/O or peripheral device and/or a controller or adapter for any such device. I/O device 152 may be integrated into or separate from any other component, such as a chipset component. I/O device 152 may be connected or coupled to processor 110 by interface 150, which may represent any type of bus, point-to-point, or other wired or wireless interface or connection, including a Peripheral Component Interconnect Express (PCIe) bus or a Direct Media Interface (DMI) bus. Furthermore, interface 150 may represent an interface or connection to any other component, such as a peripheral control agent, a bus bridge, a chipset component, and/or an I/O adapter or controller, which may in turn be connected or coupled to processor 110.

Returning to processors 110 and 130, each includes a pair of execution cores (cores 112 and 114 in processor 110 and cores 132 and 134 in processor 130), a link unit (119 and 139, respectively), and an interface unit (118 and 138, respectively). Each of link units 119 and 139 may include any circuitry or other hardware with which processor 110 or processor 130 (respectively) may communicate with each other and/or another processor or processors in system 100, for example through link 120. Each of interface units 118 and 138 may include any circuitry or other hardware with which processor 110 or processor 130 (respectively) may communicate with any other components, such as I/O device 152 (e.g., through interface 150) and PCA 142 (e.g., through interface 140), respectively, in system 100.

Shown within cores 112 and 132 are secure enclaves 111 and 131, respectively. Each may be a secure enclave created, built, and initialized using ECREATE, EADD, EEXTEND, and EINIT instructions executed by cores 112 and 132, respectively, or may represent any other type of trusted or secure execution environment.

Also shown within processors 110 and 130 are locality nonce storage locations 116 and 136, respectively. Each may represent a register or any other type of storage of any size in which to store a nonce. Locality nonce storage locations 116 and 136, as well as any other locality nonce storage locations in system 100, such as locality nonce storage location 146, are populated by sampling a random number generator during each boot of system 100 and distributing the random or pseudo-random value to each component in system 100 having a locality nonce storage location. Therefore, during operation of system 100, each of locality nonce storage locations 116, 136, and 146, as well as any other locality nonce storage locations in system 100, are storing the same locality nonce.

Each locality nonce designates the locality domain of the hardware at the time of boot. Therefore, the locality nonce may be used by firmware and software running within that domain to prove locality, for example, as part of a cryptographic channel setup.

The locality nonce is replaced every time system 100 is booted, to allow for system hardware to be added or replaced, to mitigate discovery through brute force trial and error attacks, and to mitigate the risk that one successful attack will permanently compromise the security of system 100.

Any known approach may be used to protect locality nonce storage locations 116, 136, and 146. For example, write access may be restricted to microcode or secure system firmware during the boot process, and read access may be restricted to microcode through a leaf of the EGETKEY instruction.

In one representative embodiment, I/O device 152 may represent a display adapter through which confidential information may be transferred to display on system 100. Secure enclave 111 may provide for the secure execution of a user application which has been granted access to view a confidential document (e.g., by an enterprise rights management application) through I/O device 152. A protocol for establishing a secure communication channel between secure enclave 131 and/or management engine 144 may include, according to an embodiment of the present invention, verifying that both endpoints share the same locality nonce and therefore are on the same hardware platform, so as to mitigate an attack which would allow the transmission of the confidential document to be redirected to a remote platform.

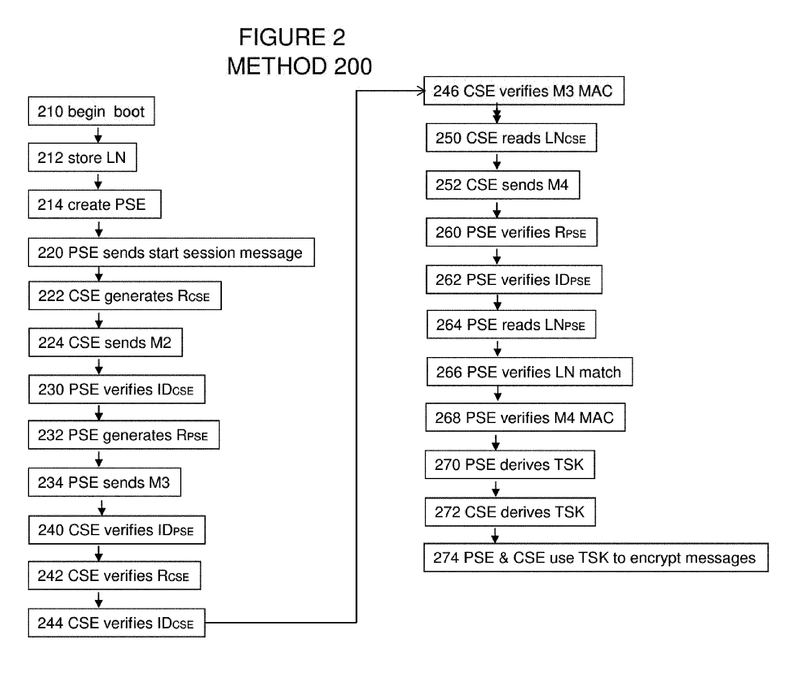

Figure 2 illustrates method 200, a method for establishing physical locality between secure execution environments according to an embodiment of the present invention. More specifically, method 200 illustrates an authenticated key exchange protocol for establishing a secure session between a platform services enclave (PSE) and a converged security engine (CSE). In addition to providing for authenticity, confidentiality, and integrity, the protocol includes a challenge-response handshake using a locality nonce to determine locality domain according to an embodiment of the present invention.

Although method embodiments of the invention are not limited in this respect, reference may be made to elements of Figure 1 to help describe the method embodiment of Figure 2. Method 200 may refer to one or more secure enclaves that may have been created, built, and initiated using ECREATE, EADD, EEXTEND, and EINIT instructions, the use of a report of an enclave's content and/or identity using an EREPORT instruction, and a request for a key using an EGETKEY instruction; however, embodiments of the present invention are not limited to these specifically named instructions.

In box 210 of method 200, an information processing system is booted. In box 212 a random number generator is sampled and the random or pseudo-random value is distributed to locality nonce registers in various components of the information processing system, including a first locality nonce register in a first processor and a second locality nonce register associated with the CSE. In box 214, a first secure enclave (e.g., the PSE) is created, built, and initialized on the first processor.

In box 220 of method 200, the PSE sends a message (M1) to the CSE to start the session. In box 222, the CSE generates a random or pseudo-random nonce (R_{CSE}). In box 224, the CSE sends a message (M2) to the PSE, M2 including a concatenation of R_{CSE} and ID_{CSE}, where ID_{CSE} is a value establishing the identity of the CSE.

In box 230, the PSE uses ID_{CSE} from M2 to verify the identity of the CSE, e.g., that it matches the expected identity of the CSE. In box 232, the PSE generates a random or pseudo-random nonce (R_{PSE}). In box 234, the PSE sends a message (M3) to the CSE, M3 including a concatenation of ID_{PSE}, ID_{CSE}, R_{CSE}, and R_{PSE}, where ID_{PSE} is a report of the parent enclave's content and/or identity (e.g., generated by an EREPORT instruction). The concatenation in M3 may be protected by a hash-based message authentication code (HMAC) using a master key in a secure hash algorithm (e.g., SHA-256), where the master key may be a symmetric key known by both the PSE and the CSE.

In box 240, the CSE uses ID_{PSE} from M3 to verify the identity of the PSE, e.g., that it matches the expected identity of the PSE. In box 242, the CSE verifies that the R_{CSE} received in M3 matches the R_{CSE} sent in M2. In box 244, the CSE verifies that the ID_{CSE} received in M3 matches the ID_{CSE} sent in M2. In box 246, the CSE uses the master key to verify the MAC sent in M3.

In box 250, the CSE reads the locality nonce (LN_{CSE}) from the second locality nonce register. In box 252, the CSE sends a message (M4) to the PSE, M4 including a concatenation of ID_{CSE}, R_{PSE}, and LN_{CSE}. The concatenation in M4 may be protected by an HMAC using the master key in the SHA-256.

In box 260, the PSE verifies that the R_{PSE} received in M4 matches the R_{PSE} sent in M3. In box 262, the PSE verifies that the ID_{CSE} received in M4 matches the ID_{CSE} received in M2. In box 264, the PSE reads the locality nonce (LN_{PSE}) from the first locality nonce register, for example, using an EGETKEY instruction. In box 266, the PSE verifies that the LN_{PSE} matches the LN_{CSE} received in M4. In box 268, the PSE uses the master key to verify the MAC sent in M4.

In box 270, the CSE derives a transient session key from an HMAC-SHA256 of a concatenation of R_{PSE} and R_{CSE}. In box 272, the CSE derives the same transient session key from an HMAC-SHA256 of a concatenation of R_{PSE} and R_{CSE}. In box 274, the PSE and the CSE begin exchanging messages encrypted with the transient session key.

In various embodiments of the present invention, the method illustrated in Figure 2 may be performed in a different order, with illustrated boxes combined or omitted, with additional boxes added, or with a combination of reordered, combined, omitted, or additional boxes. Furthermore, method embodiments of the present invention are not limited to method 200 or variations thereof. Many other method embodiments (as well as apparatus, system, and other embodiments) not described herein are possible within the scope of the present invention.

Embodiments or portions of embodiments of the present invention, as described above, may be stored on any form of a machine-readable medium. For example, all or part of method 200 may be embodied in software or firmware instructions that are stored on a medium readable by processor 110 and/or 130, which when executed by processor 110 and/or 130, cause processor 110 and/or 130 to execute an embodiment of the present invention. Also, aspects of the present invention may be embodied in data stored on a machine-readable medium, where the data represents a design or other information usable to fabricate all or part of processor 110 and/or 130.

Thus, embodiments of an invention for establishing physical locality between secure execution environments have been described. While certain embodiments have been described, and shown in the accompanying drawings, it is to be understood that such embodiments are merely illustrative and not restrictive of the broad invention, and that this invention not be limited to the specific constructions and arrangements shown and described, since various other modifications may occur to those ordinarily skilled in the art upon studying this disclosure. In an area of technology such as this, where growth is fast and further advancements are not easily foreseen, the disclosed embodiments may be readily modifiable in arrangement and detail as facilitated by enabling technological advancements without departing from the principles of the present disclosure or the scope of the accompanying claims.

## Claims

1. A processor comprising:
a storage location in which to store a locality nonce; and
an execution core to execute a first instruction to create a secure execution environment and to execute, from within the secure execution environment, a second instruction to read the locality nonce from the storage location.

2. The processor of claim 1, wherein the locality nonce is a random value generated while booting the processor.

3. The processor of claim 1, further comprising a link unit to send a message including the locality nonce to prove physical locality of the processor.

4. A method comprising:
executing, from within a first secure execution environment in a processor, a first instruction to read a locality nonce; and
sending a first message including the locality nonce to prove physical locality of the processor.

5. The method of claim 4, wherein the locality nonce is read from a first storage location in the processor.

6. The method of claim 5, further comprising:
sampling a random number generator to provide a value for the first locality nonce; and
storing the first locality nonce in the first storage location in connection with booting the processor.

7. The method of claim 4, wherein sending the first message includes sending the first message to a second secure execution environment in a system including the processor, further comprising storing the locality nonce in a second storage location associated with the second secure execution environment in connection with booting the system.

8. The method of claim 7, further comprising:
reading, from within the second secure execution environment, content from the second storage location; and
comparing, from within the second secure execution environment, the content read from the second storage location to the locality nonce sent in the first message.

9. The method of claim 8, further comprising:
sending, from the second execution environment to the processor, a second message including the content read from the second storage location; and
comparing, by the processor, the content read from the second storage location and sent in the second message to the locality nonce read from the first storage location.

10. The method of claim 9, further comprising:
using a match between the content read from the second storage location and the locality nonce read from the first storage location as proof that the processor and the second execution environment are within the same locality domain; and
establishing a secure communication channel based in part on the match between the content read from the second storage location and the locality nonce read from the first storage location.

11. A system comprising:
a processor including
a first storage location in which to store a locality nonce, and
a first execution core to execute a first instruction to create a first secure execution environment and to execute, from within the first secure execution environment, a second instruction to read the locality nonce from the first storage location; and
an agent to read the locality nonce from a second storage location associated with a second secure execution environment.

12. The system of claim 11, wherein the locality nonce is a random value generated while booting the system.

13. The system of claim 12, wherein:
the processor further comprises a first unit to send to the agent a message including the locality nonce read from the first storage location, and
the agent further comprises a second unit to receive the message.

14. The system of claim 13, wherein the agent is to compare the locality nonce received in the message to the locality nonce read from the second storage location.

15. The system of claim 14, wherein the agent is to use a match between the locality nonce received in the message and the locality nonce read from the second storage location as proof that the processor and the agent are within the same locality domain.
